# EUROPEAN PATENT SPECIFICATION

(11) **EP 2 212 045 B1**
(45) Date of publication and mention of the grant of the patent: **21.08.2013**
(21) Application number: 07847549.8
(22) Date of filing: 29.11.2007
(51) Int. Cl.: B23B 49/00, B23B 51/10

(54) **Boring arrangement to be connected to a boring machine**
Mit einer Bohrmaschine zu verbindende Bohranordnung
Accessoire de perçage à raccorder à une perceuse

(43) Date of publication of application: 04.08.2010
(73) Proprietor: Airbus Operations GmbH, 21129 Hamburg (DE)
(72) Inventor: STOLTE, Jürgen, 23714 Bad Malente (DE); GAUL, Wolfgang, 21129 Hamburg (DE); HOMANN, Axel, 21147 Hamburg (DE)
(74) Representative: Maiwald Patentanwalts GmbH
(86) International application number: PCT/EP2007/063033
(87) International publication number: WO 2009/068108

(56) References cited:
- CN-A- 101 085 473
- DE-A1- 3 801 573
- FR-A- 2 327 013
- US-A- 2 338 765

## Description

### Technical field

The present invention relates to a boring arrangement for boring a final hole or a countersink hole in a workpiece, preferably of an aircraft.

### Background of the invention

For better aerodynamic efficiency and balance of aircrafts it is preferred to optimize the aerodynamic shape of each workpiece that offers an outer surface. Less attention to those circumstances causes more fuel consumption and therefore higher costs of flights.

Therefore, the smallest extension of the rived heads of a workpiece such as the part of a wing of an aircraft even with less than a millimetre should be avoided. Each final hole or countersink hole have to be bored very precisely an exactly, even and particularly at non-planar surfaces of said workpieces. The mechanical boring process for tens or hundreds of final holes or countersink holes for rivets with different size, length and angle to surface is very time consuming and vulnerable for errors of the worker.

US 2,338,765, which discloses a boring arrangement with the features of the preamble of claim 1, discloses a centering device for drills which can be attached to a drilling tool, the drilling tool comprising a handle, a body, a shank and a drill for drilling a hole. The centering device is mounted to a collar which is secured to the shank and is adapted to move in longitudinal direction of the drill.

### Summary of the invention

It is an object of the invention to provide a less time consuming and simple boring device for boring final holes and countersink holes in a workpiece with exact length, particularly regarding to a non-planar workpiece of an aircraft.

Further, in view of the above it is an object of the invention to provide a boring arrangement, which can considerably reduce the assembly time and effort involved in joining together components having overlapping joint surfaces, especially with a great number of rivet holes that must be bored and rivet connections that must be set therein.

The above objects have been achieved according to the invention in a boring arrangement adapted to be connected to and used together with a boring machine, said boring arrangement comprising: a boring bit or drill bit, especially a countersink bit for boring a final hole or a countersink hole in a hole of a workpiece with a fastening portion adapted to be secured to the boring machine; a stopping element that is movably connected to the boring bit so as to enable a relative motion in a boring feed advance direction and at an end facing away from said fastening portion; and a second element movable to the boring bit so as to enable a relative motion in said boring feed advance direction, and that has a hollow interior space therein adapted to allow the boring bit to pass therethrough in said boring feed advance direction so as to contact the workpiece and bore a final hole or a countersink hole therein, wherein the second element comprises a first end facing towards to the said stopping element, and wherein the second element comprises a pin element at a second end facing towards said workpiece to contact said workpiece, preferably the most distant part of the border area of said hole of the said workpiece.
The said pin element is generally in contact with the said border area during the whole boring process. The length of the final hole or the countersink hole is generally measured from the contact end of the pin element - --- which should be exactly the most distant part of the workpiece surface near the hole more particular the planned final hole or countersink hole- to the end of the countersink hole or the final hole/ the depth of the workpiece.

According to the invention, it is especially advantageous if said second element is insertable into a bearing bush affixed in a boring template to reduce the assembly time once more.

According to the invention the said second element is affixably connected in a predefined position to the said bearing bush.
Regarding the combination or interaction between the boring arrangement and the boring machine, various embodiments are possible. For example, the boring arrangement may generally be arranged as a accessory on the front or working end of the boring machine, whereby the boring bit is secured with a fastening portion to the boring machine.
The stopping element is mounted to the boring bit preferably by means of a clamping screw or other fastening devices.
The said wished length of the final hole or the countersink hole is adjustable by moving, preferably rotating, the stopping element in the said boring feed advance direction. The bore process stops/ the final length of the bore hole is reached if the said stopping element and the end of the said element facing towards to the said stopping element are in contact.

It should be noted that the term "comprising" does not exclude other elements and the "a" or "an" does not exclude a plurality. It should also be noted that reference signs in the claims shall not be construed as limiting the scope of the claims.

### Brief description of the drawing

In order that the invention may be clearly understood, it will now be described in connection with an example embodiment, with references to the accompanying drawing.
Fig. 1 is a schematic side view of an embodiment of a boring arrangement according to the invention.
Fig. 2 is a profile view of a non planar workpiece with a final hole and a countersink hole

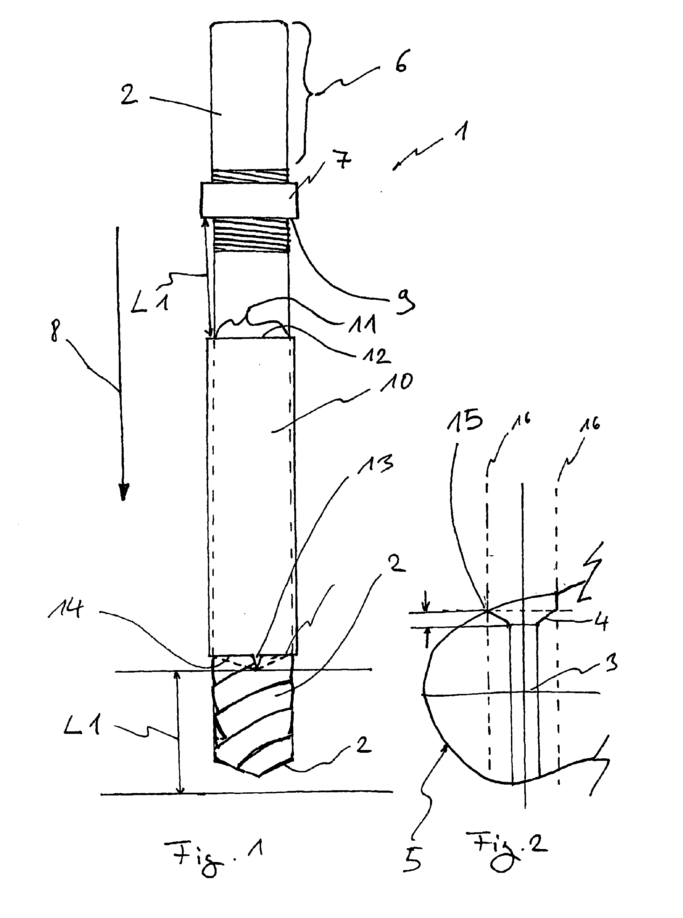

A boring arrangement 1 is adapted to be connected to a boring machine, not shown here. The boring arrangement 1 comprises a boring bit 2 for boring a final hole 3 and/or a countersink hole 4 (Fig. 2) in a hole of a workpiece 5. The boring bit 2 has a fastening portion 6 adapted to be secured to the boring machine. A stopping element 7 is movably connected to the boring bit 2 so as to enable a relative motion in a boring feed advance direction 8 and at an end 9 facing away from said fastening portion 6.

Further the boring arrangement 1 offers an element 10 movable to the boring bit 2 so as to enable a relative motion in the boring feed advance direction 8, and that has a hollow interior space 11 therein adapted to allow the boring bit 2 to pass therethrough in said boring feed advance direction 8 so as to contact the workpiece 5 and bore a final hole 3 or a countersink hole 4 therein, wherein the element 10 comprising an end 12 facing towards to the said stopping element 7, and wherein the element 10 comprising a pin element 13 at a second end 14 facing towards to said workpiece 5 to get in contact with preferably the most distant part 15 of the border area 16 of said hole of the said workpiece regarding said boring feed advance direction 8 . The element 10 is insertable into a bearing bush, not shown here, that is affixed in a boring template, even not shown. Furthermore the element 10 has fixing means 17 and is connectable in a predefined position to the said bearing bush. The drilling arrangement I allows to bore a borehole with exact length L1 and therefore preserves that no rivet head or other fixing element extends over the workpiece 5.

## Claims

1. A boring arrangement (1) adapted to be connected to a boring machine, said boring arrangement (1) comprising:
- a boring bit (2) for boring a final hole or a countersink hole in a hole of a workpiece (5) with a fastening portion (6) adapted to be secured to the boring machine;
- a stopping element (7) that is movably connected to the boring bit (2) so as to enable a relative motion in a boring feed advance direction (8) and with an end facing away from said fastening portion (6);
- a second element (10) movable to the boring bit (2) so as to enable a relative motion in said boring feed advance direction (8), and that has a hollow interior space (11) therein adapted to allow the boring bit (2) to pass therethrough in said boring feed advance direction (8) so as to contact the workpiece (5) and bore a final hole or a countersink hole (4) therein, wherein the second element (10) comprises an end (12) facing towards to the said stopping element (7), and **characterised in that** the second element (10) comprises pin element (13) at a second end(14) facing towards said workpiece (5) to contact said workpiece, preferably the most distant part (15) of the border area (16) of said hole of the said workpiece (5) regarding said direction (8).

2. The boring arrangement (1) according to claim 1, wherein said second element (10) is insertable into a bearing bush affixed in a boring template.

3. The boring arrangement according to claim 2, wherein said second element (10) is affixably connected in a predefined position to the said bearing bush.

## Patentansprüche

1. Eine Bohrvorrichtung (1) dazu ausgeführt mit einer Bohrmaschine verbunden zu sein, die Bohrvorrichtung (1) aufweisend:
- einen Bohraufsatz (2) zum Bohren einer abschließenden Bohrung oder einer Senkbohrung in einem Loch eines Werkstücks (5) mit einem Befestigungsabschnitt (6), welcher dazu ausgeführt ist, an der Bohrmaschine befestigt zu sein;
- ein Anschlagselement (7), welches beweglich mit dem Bohraufsatz (2) verbunden ist, um eine relative Bewegung in einer Bohr-Vorschubrichtung (8) zu ermöglichen, mit einem dem Befestigungsabschnitt (6) abgewandten Ende;
- ein zum Bohraufsatz (2) bewegliches zweites Element (10), um eine relative Bewegung in der Bohr-Vorschubrichtung (8) zu ermöglichen, welches darin einen hohlen Innenraum (11) aufweist, welcher dazu ausgeführt ist, dem Bohraufsatz (2) zu ermöglichen, in der Bohr-Vorschubrichtung (8) dort hindurch zu queren, um das Werkstück (5) zu berühren und eine abschließende Bohrung oder eine Senkbohrung (4) hierein zu bohren, wobei das zweite Element (10) ein dem Anschlagselement (7) zugewandtes Ende (12) aufweist und **dadurch gekennzeichnet, dass** das zweite Element (10) ein Pin-Element (13) an einem zweiten, dem Werkstück (5) zugewandten Ende (14) aufweist, um das Werkstück zu berühren, vorzugsweise den bezüglich der Richtung (8) am weitesten entfernten Abschnitt (15) des Randbereichs (16) des Lochs des Werkstücks (5).

2. Die Bohrvorrichtung (1) nach Anspruch 1, wobei das zweite Element (10) in eine Buchse, welche in einer Bohrschablone befestigt ist, einführbar ist.

3. Die Bohrvorrichtung nach Anspruch 2, wobei das zweite Element (10) in einer vordefinierten Position mit der Buchse fest verbunden ist.

## Revendications

1. Système de perçage (1) adapté pour être relié à une machine de perçage, ledit système de perçage (1) comprenant :
- une mèche de perçage (2) destinée à percer un trou définitif ou un trou fraisé dans un trou d'une pièce à usiner (5) avec une portion de fixation (6) adaptée pour être fixée à la machine de perçage ;
- un élément d'arrêt (7) qui est relié de manière mobile à la mèche de perçage (2) de manière à permettre un mouvement relatif dans une direction d'avancement de perçage (8) et avec une extrémité opposée à ladite portion de fixation (6) ;
- un second élément (10) mobile par rapport à la mèche de perçage (2) de manière à permettre un mouvement relatif dans ladite direction d'avancement de perçage (8), et qui présente un espace intérieur creux (11) adapté pour que la mèche de perçage (2) puisse passer à travers celui-ci dans ladite direction d'avancement de perçage (8) de manière à venir en contact avec la pièce à usiner (5) et à percer un trou définitif ou un trou fraisé (4) dans celle-ci, le second élément (10) comprenant une extrémité (12) tournée vers ledit élément d'arrêt (7), et **caractérisé en ce que** le second élément (10) comprend un élément de broche (13) à une seconde extrémité (14) tournée vers ladite pièce à usiner (5) afin de venir en contact avec ladite pièce à usinée, de préférence avec la partie la plus distante (15) de la zone de bordure (16) dudit trou de ladite pièce à usiner (5) par rapport à ladite direction (8).

2. Système de perçage (1) selon la revendication 1, dans lequel ledit second élément (10) peut être inséré dans un coussinet fixé dans un gabarit de perçage.

3. Système de perçage selon la revendication 2, dans lequel ledit second élément (10) est relié audit coussinet de manière à pouvoir être fixé dans une position prédéfinie.
